# EUROPEAN PATENT APPLICATION

(11) **EP 1 387 295 A1**
(43) Date of publication of application: **04.02.2004**
(21) Application number: 02090287.0
(22) Date of filing: 03.08.2002
(51) Int. Cl.: G06F 17/30

(54) **Metadata structure consisting of a multi-layer format**

(71) Applicant: DEUTSCHE THOMSON-BRANDT GMBH, 78048 Villingen-Schwenningen (DE)
(72) Inventor: Li, Hui, 30419 Hannover (DE); Hörentrupp, Jobst, 30161 Hannover (DE); Janssen, Uwe, 30926 Seelze (DE); Schiller, Harald, 30539 Hannover (DE); Winter, Marco, 30173 Hannover (DE)
(74) Representative: Hartnack, Wolfgang, Dipl.-Ing.

(57) **Abstract**

The invention proposes a multi-layer structure for metadata, where the innermost metadata kernel (122) contains the metadata substance (1221) and one or more links (1222). The next layer, metadata body (12), combines one metadata kernel with additional metadata body data like history data. A comparison at this metadata body layer is especially suited for checking the identity of any two metadata. In the outermost identifier metadata layer (1), a metadata body (12) is combined with identifier metadata data, like identifier data (111) or other container data (112).

## Description

The invention relates to a method defining a multi-layer format metadata structure facilitating identification of items of metadata, and to a corresponding data structure.

### Background

Metadata is defined as 'data about data'. In multimedia applications, metadata typically are data about audiovisual (AV) data, these AV data often being called 'essence'. For metadata, being 'about something' always means pointing to something or containing a link or reference or identifier to/of something. In general, metadata can point to other data like AV essences as well as to other metadata. Metadata can be generated from data, and metadata can also be generated from metadata. Metadata can include links to data using unique identifiers of said data. Metadata can also include links to other metadata using unique identifiers of said other metadata.
Besides having a link or links, all metadata also have a content or value or substance, which we will call 'metadata substance' henceforth. Metadata substance denotes the human perceivable part of a metadata, which is used to represent the metadata in any kind of user interface (UI). In many cases, e.g. with annotation metadata, the metadata substance is just a text, i.e. a string of character data taken from a predetermined alphabet. But metadata substance can be more complex than text, e.g. still picture data in case of thumbnails, which will be presented to the human user and may representing e.g. an AV scene.
This means, that all types of metadata should have a general data structure, which contains a metadata substance and one or more metadata links. Also, in order to identify metadata for the purpose of archiving, transferring, exchanging, duplicating, comparing or editing, it is desirable to have an identifiable general data structure for metadata.

WO-A-00/45294 describes a simple metadata structure. A metadata kernel only is being used.

### Invention

The simple metadata structure of WO-A-00/45294 does not set up any identifiable general structure for metadata.

A problem to be solved by the invention is to find a unique structure for all kinds of metadata, which structure allows identification and classification of the metadata and extended links for the metadata.
This problem is solved by the method disclosed in claim 1 and the data structure disclosed in claim 7.

The invention concerns a more sophisticated metadata structure having multiple layers. A new purpose of metadata is provided, which allows not only links like 'data about data', but also 'metadata about metadata'. Using unique identifiers, the invention allows identifying and classifying metadata, giving a structure to metadata wherein the metadata are analysed with respect to their individual parts.
In this application, 'Metadata' is used as a general term denoting any external or internal item, when considering it as 'data about data'.
Because the data structure of metadata consists of multiple layers it will be referred to in this application as 'Metadata Onion'.

### Abbreviations used in this application:

- ID_MD: Identifiable Metadata, i.e. all kind of Metadata;
- ID_MD_DATA: Identifier Metadata Data;
- UUID: Universal Unique Identifier;
- MD_BODY: Metadata Body;
- MD_BODY_DATA: Metadata Body data;
- MD_KERNEL: Metadata Kernel;
- MD_Substance: Metadata substance;
- Link_UUID: Link UUID;
- XML: Extensible Mark-Up Language;
- clpi: clip information.

In principle, the inventive method defines a multi-layer format metadata structure facilitating identification of said metadata, the method including the steps:
- defining an item of identifiable metadata as containing identifier metadata data and a metadata body, wherein said identifier metadata data facilitates identification purposes and contains unique identification data, e.g. a UUID, and optionally contains a container data field for optional insertion of additional identification data, e.g. storage locations of said metadata;
- constructing said metadata body as containing metadata body data and a metadata kernel, wherein said metadata body data facilitates determination whether any two items of metadata are identical based on a comparison of the metadata bodies only;
- arranging said metadata kernel so as to contain metadata substance data representing the substance of said item of metadata, and one or more links to other items of metadata or essence.

In principle, the inventive data structure concerns a multi-layer format metadata item, said data structure facilitating identification of said metadata and including:
- identifier metadata data and a metadata body, wherein said identifier metadata data facilitates identification purposes and contains unique identification data, e.g. a UUID, and optionally contains a container data field for optional insertion of additional identification messages, e.g. storage locations of said metadata;
- said metadata body containing metadata body data and a metadata kernel, wherein said metadata body data facilitates determination whether any two items of metadata are identical based on a comparison of the metadata bodies only;
- said metadata kernel containing metadata essence data representing the essence of said item of metadata, and one or more links to other items of metadata or essence.

### Drawing

Exemplary embodiments of the invention are described with reference to the accompanying drawing, which shows in:

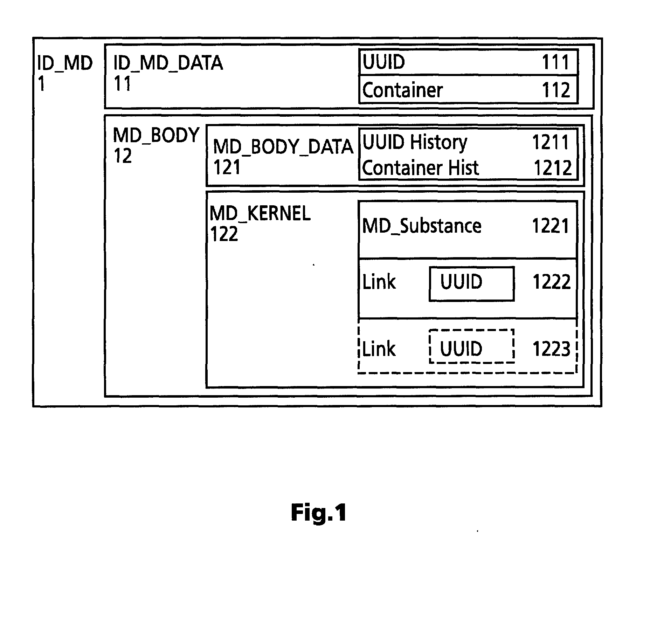

- Fig. 1: 'Metadata Onion' structure.

### Exemplary embodiments

Construction of the Metadata Onion:All Metadata are Identifiable Metadata (ID_MD) 1. An ID_MD item includes an Identifier Metadata Data item (ID_MD_DATA) 11 and a Metadata Body item (MD_BODY) 12. The ID_MD must not be empty. ID_MD_DATA can be used for identification purposes and MD_BODY can be used for comparing several metadata.
The ID_MD_DATA normally includes a UUID 111 and a Container 112, but at least a UUID. Therefore the ID_MD_DATA cannot be empty. The UUID is a universally unique identifier for metadata, it contains messages, such as creating time, creator and other status messages. UUID is described e.g. in US-A-5 870 753. Such identifier can be generated independently by every device and is unique for e.g. every 100nsec within the next centuries.
The Container provides reserved data space for additional identification messages, e.g. storage locations. The UUID and the Container characterise a particular item of metadata.

The MD_BODY includes the Metadata Body Data (MD_BODY_DATA) 121 and the Metadata Kernel (MD_KERNEL) 122. The MD_BODY must not be empty.
The MD_BODY_DATA 121 includes the UUID History 1211 of this particular metadata and may additionally include a Container History 1212. The UUID History contains a list of all those UUID values the ID_MD_DATA previously had. Correspondingly, the Container History contains a list of all Container data values the ID_MD_DATA previously had. The MD_BODY_DATA allows pursuing the history of metadata.

The MD_KERNEL 122 contains the kernel data for the metadata and is defined as a set containing a recognisable substance and one or more recognisable link(s) associated with that substance. Thus, the MD_KERNEL includes metadata substance (MD_Substance) and one or more links to data UUID (Link_UUID), i.e. one or more links to other metadata or essence. The MD_Substance 1221 decides the data type of the respective metadata. The MD_Substance provides metadata-recognisable messages. The Link_UUIDs 1222, 1223, ... are linking to the associated data essence. The MD_KERNEL must not be empty.

Some rules for comparing identical metadata:
- The ID_MD must not be empty;
- The MD_BODY must not be empty;
- Metadata are considered to be identical, if their MD_BODYs are identical, wherein the content of the ID_MD_DATA is not included in the identity check but the content of the MD_BODY_DATA is included in the identity check.
To be 'identical' means to have logical identity, independent of the coding.

In the invention, different UUIDs are used to uniquely identify identical MD_BODYs 12. Non-identical MD_BODYs will never have the same UUID. If the UUIDs are identical, their MD_BODYs will be identical.
Any modification to an MD_BODY 12 will result in a new UUID 111 being attached. According to the ancestor principle this will also modify the UUID history 1211.
A format conversion does not constitute such a modification, i.e. in case metadata is converted from any external format into the format according to the invention, the UUID will be kept.
On the other side, when duplicating an ID_MD the original UUID is kept.
Two ID_MDs with different UUIDs may nevertheless happen to be identical in the above sense, i.e. they may happen to contain identical MD_BODYs. As mentioned above, the UUID will be stored in ID_MD_DATA. Due to the fact that the content of the ID_MD_DATA is not included in an identity check, the UUID itself is irrelevant for the result of the identity check.

As mentioned above, the UUID history 1211 is stored in MD_BODY_DATA. Due to the fact that the content of the MD_BODY_DATA is included in the identity check, the UUID history is included in the result of the identity check.
The UUID history may be empty, therefore MD_BODY_DATA may be empty.

Using the above-described metadata data structure, metadata can be identified exactly. The metadata identifying process is not limited to the processes of metadata comparing, transferring, exchanging, duplicating, metadata editing and metadata archiving.

## Claims

1. Method for defining a multi-layer format metadata structure facilitating identification of said metadata, the method including the steps:
- defining an item of identifiable metadata (1) as containing identifier metadata data (11) and a metadata body (12), wherein said identifier metadata data facilitates identification purposes and contains unique identification data (111), e.g. a UUID, and optionally contains a container data field (112) for optional insertion of additional identification data, e.g. storage locations of said metadata;
- constructing said metadata body (12) as containing metadata body data (121) and a metadata kernel (122), wherein said metadata body data facilitates determination whether any two items of metadata are identical based on a comparison of the metadata bodies only;
- arranging said metadata kernel (122) so as to contain metadata substance data (1221) representing the substance of said item of metadata (1), and one or more links (1222, 1223) to other items of metadata or essence.

2. Method according to claim 1, wherein said metadata body data contains history data (1211) about said identification data (111) of said item of identifiable metadata (1), e.g. a UUID history,

3. Method according to claim 1 or 2, wherein said metadata body data contains history data (1212) about said container data (112) of said item of identifiable metadata (1).

4. Method according to one of claims 1 to 3, wherein said item of metadata (1) is identified when archiving, transferring, exchanging, duplicating, comparing, or editing it.

5. Method according to one of claims 1 to 4, wherein items of metadata are considered to be identical, if their metadata bodies (12) are identical, wherein the content of said identifier metadata data (11) is not included in the identity check.

6. Method according to claim 5, wherein being identical means having logical identity independent of the type of coding of the items of metadata.

7. Data structure for a multi-layer format metadata item (1), said data structure facilitating identification of said metadata and including:
- identifier metadata data (11) and a metadata body (12), wherein said identifier metadata data facilitates identification purposes and contains unique identification data (111), e.g. a UUID, and optionally contains a container data field (112) for optional insertion of additional identification messages, e.g. storage locations of said metadata;
- said metadata body (12) containing metadata body data (121) and a metadata kernel (122), wherein said metadata body data facilitates determination whether any two items of metadata are identical based on a comparison of the metadata bodies only;
- said metadata kernel (122) containing metadata essence data (1221) representing the essence of said item of metadata (1), and one or more links (1222, 1223) to other items of metadata or essence.

8. Data structure according to claim 7, wherein said metadata body data contains history data (1211) about said identification data (111) of said item of identifiable metadata (1), e.g. a UUID history.

9. Data structure according to claim 7 or 8, wherein said metadata body data contains history data (1212) about said container data (112) of said item of identifiable metadata (1).
